Europäisches Patentamt

European Patent Office

Office européen des brevets

(11) Numéro de publication: **0 302 794**
**A2**

## (12) DEMANDE DE BREVET EUROPEEN

(21) Numéro de dépôt: **88402033.0**

(22) Date de dépôt: **03.08.88**

(51) Int. Cl.⁴: **A 01 K 39/06**

(30) Priorité: **05.08.87 FR 8711234**

(43) Date de publication de la demande:
**08.02.89 Bulletin 89/06**

(84) Etats contractants désignés:
**BE DE ES GB IT NL**

(71) Demandeur: **PEREZ TABARLY INGENIERIE**
**Le Guerinet**
**F-40180 Yzosse (FR)**

(72) Inventeur: **Perez, Charles**
**Le Guérinet**
**F-40180 Yzosse (FR)**

(74) Mandataire: **Bérogin, Francis et al**
**CABINET HARLE & PHELIP 21, rue de la Rochefoucauld**
**F-75009 Paris (FR)**

(54) Dispositif, box et procédé de contention pour le gavage des volailles.

(57) La présente invention concerne un box de contention pour le gavage des volailles.

Selon l'invention ce box de contention a une forme parallélépipédique, il comporte un couvercle (8) articulé autour d'au moins un axe horizontal et est muni d'un dispositif de contention comportant des moyens de blocage de la tête et de mise en extension du cou de la volaille. Ces moyens sont constitués par le couvercle (8) muni à cet effet d'une rainure longitudinale (9) de largeur correspondant au cou de l'animal, ladite rainure (9) s'étendant vers l'arrière à partir de l'extrémité avant (83) du couvercle (8) et étant associée à une goupille de verrouillage (11) du passage de la tête, les côtés (91, 92) de cette rainure (9) étant destinés à prendre appui sous chaque côté de la tête et à tirer l'animal vers le haut de façon à bloquer et à mettre en extension le cou lors du pivotement du couvercle (8) autour du ou des axes horizontaux.

FIG 5

EP 0 302 794 A2

**Description**

## DISPOSITIF, BOX ET PROCEDE DE CONTENTION POUR LE GAVAGE DES VOLAILLES

La présente invention concerne les dispositifs de contention pour le gavage des volailles.

Elle concerne également un procédé de contention et un box, destiné à immobiliser les volailles, permettant d'une part le transport et d'autre part la mise en position de l'animal pour le gavage, de telle façon qu'il ne puisse plus bouger, qu'il ouvre naturellement son bec et que l'opérateur garde ses deux mains libres.

Afin d'assurer un engraissement rapide des volailles, et en particulier dans le but de produire du foie gras, il est nécessaire de réaliser une opération de gavage ou engraissement forcé des volailles.

Ce gavage peut se faire soit à la main, à l'entonnoir, ou à l'aide d'un appareil appelé gaveuse mécanique.

Le gavage à la main s'opère en introduisant, dans la gorge de l'oiseau, du grain (maïs) ou des boulettes de la forme d'une olive (pâton), faites de farine de maïs et de riz cuit. On fait descendre ces aliments dans le jabot de l'animal en opérant une pression de haut en bas, le long du cou.

On peut se servir aussi d'un entonnoir de dimension convenable, dont on introduit l'extrémité profondément dans l'arrière gorge. Cet entonnoir est généralement surmonté d'un dispositif type moulinette, destiné à pousser le grain dans la gorge de l'animal.

La gaveuse mécanique est un appareil permettant de faire parvenir la nourriture jusqu'au jabot, directement et de façon mécanique. Cet appareil ne permet cependant l'emploi que des pâtées semi-fluides et privées de son.

Dans tous les cas, le gavage est une opération longue, peu aisée et très délicate. Elle nécessite en effet, à la fois une certaine force pour maintenir l'animal en place, de la délicatesse et du doigté pour ne pas le blesser lors du gavage.

Afin de faciliter les conditions de travail des gaveurs, on a développé des cages de maintien pour immobiliser la volaille.

On trouve par exemple des caisses en bois, comportant un orifice de passage de la tête au niveau du couvercle. Le gaveur s'asseoit sur la caisse et prend le cou de l'animal pour maintenir sa tête en position fixe.

Un autre système d'immobilisation est décrit dans le brevet n° 2.366.792.

Ce dispositif permet de maintenir immobiles les volailles pendant leur gavage. Il comprend un capot, mobile sur des axes, destiné à venir appuyer sur le corps de l'animal. Les axes sont montés sur des chapes solidaires de la cage et un cliquet de retenue, associé à un ressort, permet de conserver une certaine pression sur l'animal.

Le brevet n° 2.556.175 propose également une cage de gavage pour volailles.

Cette cage est constituée d'une partie fixe et d'une partie mobile. La partie fixe comprend un plaque rectangulaire constituant le fond, deux parois verticales longitudinales en forme de L, un côté vertical avant, un côté vertical arrière et une paroi horizontale supérieure ne couvrant que le montant du L.

La partie mobile de la cage est constituée par une plaque rectangulaire comportant, sur chacun de ses grands côtés, des retours verticaux triangulaires.

Le petit côté avant de cette plaque comporte deux manchons s'enfilant autour d'un axe horizontal. La plaque comporte également une ouverture rectangulaire à partir de son petit côté avant et s'étendant sur un peu plus de la moitié de sa longueur.

La partie mobile a la possibilité de rentrer dans la partie fixe par pivotement autour de l'axe horizontal.

Lorsque l'animal est dans la cage, sa tête sort par l'ouverture rectangulaire et on peut l'immobiliser, par appui de la partie mobile sur les ailes et le haut du corps, et blocage de cette partie par des moyens mécaniques.

Ces différents systèmes connus présentent de nombreux inconvénients, à la fois pour l'animal et pour l'opérateur.

Le couvercle, ou le dispositif de maintien supérieur, blesse souvent l'animal quand il s'abaisse sur son corps. Un maintien efficace nécessite une pression importante, ce qui cause parfois d'importantes lésions, ou ecchymoses, d'une part au niveau des ailes et d'autre part au niveau du foie de l'animal qui est pressé contre le fond de la cage.

Ces dispositifs de contention permettent à l'animal de bouger dans la cage, aussi il recule presque systématiquement devant le gaveur et se blesse au niveau du croupion. Il peut également se retourner ou enfouir sa tête dans la cage, ce qui implique des efforts et une perte de temps pour le remettre en position.

L'opérateur doit tenir l'animal à bout de bras pendant toute la durée du gavage, ce qui nécessite des efforts importants et, étant donné la nécessité de maintenir l'animal en place, manuellement, il est assez difficile, en même temps, de tenir l'entonnoir, d'y introduire le grain et de le pousser dans le jabot.

De plus, comme l'animal se débat en permanence, il se blesse souvent au jabot par manque d'alignement avec la gaveuse.

Un autre inconvénient de ces différents types de matériel réside dans le fait que leurs caractéristiques techniques rendent impossible le massage du jabot pendant l'opération de gavage. Il est en effet très appréciable, sinon essentiel, de pouvoir imprimer un mouvement du haut vers le bas au niveau du cou et du jabot de l'animal. Ce massage permet un meilleur remplissage du jabot et donc un meilleur engraissement des volailles.

L'invention a pour objet un dispositif de contention pour le gavage des volailles, permettant d'éliminer ces inconvénients.

Le dispositif de contention pour le gavage des volailles, selon l'invention, comporte des moyens de blocage de la tête et de mise en extension du cou de la volaille. Ces moyens consistent en une fourchette de positionnement de la tête, prenant appui sous chaque côté de ladite tête, au niveau des carotides et tirant l'animal vers le haut.

Ce dispositif permet un positionnement précis de la tête et du cou de l'animal, assurant un maintien en position aisé de l'entonnoir dans le jabot.

Toujours selon l'invention les moyens de blocage de la tête et de mise en extension du cou de la volaille sont associés à des moyens de blocage des pattes. Ces moyens de blocage des pattes sont constitués par une trappe en deux parties : une partie arrière fixe et une partie avant, mobile, coulissante, venant bloquer les pattes dans l'espace restant entre la partie arrière et la partie avant.

Ce dispositif permet de bloquer totalement le corps de l'animal par des moyens mécaniques, pour réaliser l'opération de gavage. Il permet également d'empêcher les mouvements d'avant en arrière de l'animal, éliminant ainsi les blessures au croupion.

L'invention a également pour objet un box de contention destiné au gavage des volailles.

Selon l'invention, le box de contention a une forme parallélépipédique, il comporte un couvercle pour l'introduction de la volaille, lequel couvercle est articulé autour d'au moins un axe horizontal. Le box comporte également des moyens de blocage de la tête et de mise en extension du cou de la volaille, évitant ainsi les blessures, liées au maintien par compression des dispositifs antérieurs.

Toujours selon l'invention, les moyens de blocage de la tête et de mise en extension du cou de la volaille sont constitués par le couvercle, muni à cet effet d'une rainure longitudinale de largeur correspondant au cou de l'animal. La rainure s'étend vers l'arrière à partir de l'extrémité avant du couvercle et est associée à une goupille de verrouillage du passage de la tête. Les côtés de cette rainure sont destinés à prendre appui sous chaque côté de la tête et à tirer l'animal vers le haut de façon à bloquer et à mettre en extension le cou lors du pivotement du couvercle autour du ou des axes horizontaux.

Dans un mode de réalisation particulier, le couvercle est en forme d'équerre, et constitue, en position fermée, au moins une partie de la face supérieure et de la face avant du box. Ce couvercle est articulé autour de quatre axes horizontaux, deux inférieurs, fixes, situés dans le même plane horizontal et deux supérieurs, mobiles, situés sur le couvercle lui-même, ces quatre axes définissant un parallélogramme déformable et assurant un déplacement du couvercle vers le haut, parallèlement à lui-même.

Toujours selon l'invention, un des axes horizontaux est associé à un système de blocage en au moins deux positions : une position haute de blocage de la tête dans la rainure longitudinale et de mise en extension du cou, et une position basse de fermeture du box.

Lorsque le couvercle est en position haute, et l'animal en extension, il ne peut plus reculer et est convenablement aéré.

Toujours selon l'invention, la portion de couvercle constituant une partie de la face avant du box, en position basse, descend jusqu'à environ le niveau inférieur du corps de l'animal et se dégage lors de la mise en position haute de façon à libérer l'accès au jabot et permettre son massage lors du gavage.

Cette possibilité de massage, réalisé simultanément au gavage, est lié à la conception générale du dispositif. Une des mains de l'opérateur est libre grâce au maintien mécanique de l'animal et cette main peut masser le jabot grâce à l'ouverture avant, créée par la mise en extension de l'animal.

Selon une autre caractéristique importante, le box de contention comporte un plancher intermédiaire anatomique, épousant les formes du corps de l'animal et disposé entre le fond et la face supérieure du box.

Ce plancher anatomique empêche l'animal de bouger, assure un excellent contact et une pression équivalente en tous points de la surface inférieure de la volaille et en particulier des foies. Ce plancher anatomique assure un meilleur confort et élimine en grande partie les ecchymoses.

Selon l'invention, le plancher anatomique comporte des moyens de blocage des pattes de l'animal.

Dans un mode de réalisation particulier le plancher anatomique est en forme de trappe et est divisé en deux parties, une partie arrière fixe et une partie avant mobile, coulissant de l'avant vers l'arrière dans des rainures situées sur les faces latérales du box. La partie avant mobile vient bloquer les pattes de l'animal contre la partie arrière fixe et le plancher est situé à une hauteur, par rapport au fond, sensiblement équivalente à la hauteur des pattes.

Toujours selon l'invention, le box de contention comporte à sa partie arrière un trou ou orifice destiné à évacuer les déjections de l'animal.

L'invention a également pour objet une enceinte destinée au transport des volailles.

Selon l'invention, cette enceinte de transport est constituée d'un assemblage de boxes de contention définis précédemment.

Toujours selon l'invention, la séparation entre les différentes volailles est réalisée par l'intermédiaire du plancher anatomique, ce plancher se prolongeant sur les côtés jusqu'à la face supérieure de l'enceinte.

L'invention a également pour objet un procédé de contention de volailles en vue de leur gavage.

Selon l'invention, ce procédé consiste à bloquer la tête et à mettre en extension le cou de la volaille au moyen d'une fourchette prenant appui sous chaque côté de la tête, au niveau des carotides, et tirant l'animal vers le haut.

Cette traction vers le haut est associée à un blocage des pattes au niveau de la partie inférieure du box.

Mais l'invention sera encore illustrée, sans être aucunement limitée, par la description suivante de certains modes de réalisation particuliers, donnés à titre d'exemples et représentés sur les dessins annexés.

- la figure 1 est une vue de côté du box de contention selon l'invention, sur laquelle on a représenté deux positions possibles du couvercle,

- la figure 2 est une vue de face du box de contention,

- la figure 3 est une vue de dessus de ce box,

- la figure 4 représente, en vue agrandie par rapport aux autres figures, la roue à cliquet assurant le positionnement du couvercle.

- la figure 5 est une vue en perspective d'un box de contention selon l'invention, présentant un décrochage inférieur.

- la figure 6 représente une enceinte de transport et de gavage, réalisée par l'association de plusieurs boxes de contention.

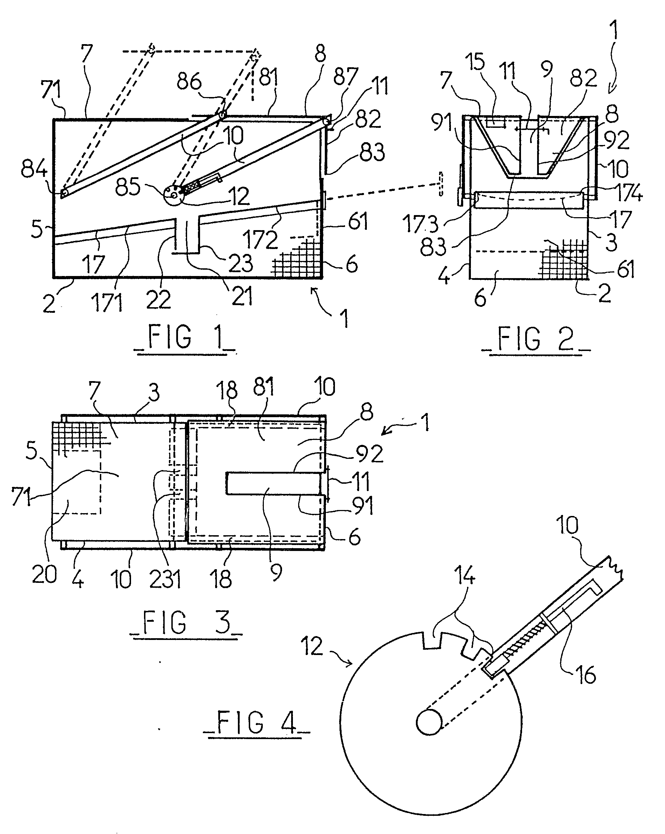

Comme on peut le voir figures 1 à 3, le box de contention 1 destiné au gavage des volailles est de forme générale parallélépipédique.

Il comporte un fond rectangulaire 2, deux parois latérales 3 et 4, une face arrière 5, une face avant 6, et une face supérieure 7.

Afin de permettre l'introduction de l'animal dans le box 1, celui-ci est muni d'un couvercle mobile 8 en forme d'équerre constituant, en position fermée, une partie de la face supérieure 7 et une partie de la face avant 6.

La face supérieure 7 est donc constituée d'une partie fixe 71 solidaire des parois latérales 3 et 4 ainsi que de la face arrière 5 et une partie mobile 81 constituant la portion horizontale supérieure du couvercle 8. Chaque partie 71 et 81 est de forme rectangulaire et a une longueur sensiblement égale à la moitié de la longueur du box 1. La largeur de la portion supérieure 81 du couvercle 8 est légèrement supérieure à la largeur du box 1 de façon à venir reposer sur les parois latérales 3 et 4 en position fermée.

La face avant 6 comprend une partie fixe 61 solidaire des parois latérales 3 et 4 ainsi que du fond rectangulaire 2 et une partie mobile 82 constituant la portion verticale du couvercle 8 en forme d'équerre. Cette portion verticale 82 du couvercle 8 a une forme générale en trapèze dont le petit côté 83, situé à l'extrémité avant, descend jusqu'à environ la moitié de la hauteur du box 1. Cette hauteur correspond sensiblement au niveau inférieur du corps de l'animal lorsqu'il est cloisonné dans le box.

La partie fixe 61 de la face avant 6 du box 1 a une forme complémentaire à cette portion verticale 82.

Le couvercle mobile 8 est muni d'une fente, ou rainure longitudinale 9, s'étendant vers l'arrière dans l'axe du couvercle et débouchant au niveau de l'extrémité avant 83. La rainure 9 traverse complètement la portion verticale 82 du couvercle 8 et s'étend le long de la partie supérieure 81 sur environ les deux tiers de sa longueur, elle a une largeur légèrement supérieure au cou de la volaille mais inférieure au diamètre de sa tête.

Une goupille amovible 11, située au niveau de la partie supérieure de la portion verticale 82, assure le verrouillage de passage de la tête de l'animal.

Le couvercle 8 est mobile et articulé autour de quatre axes horizontaux : deux inférieurs 84 et 85 et deux supérieurs 86 et 87.

Les deux axes horizontaux inférieurs 84 et 85 sont fixes et situés dans un même plan horizontal approximativement au niveau de la mi-hauteur des parois latérales 3 et 4.

Les deux axes horizontaux supérieurs 86 et 87 sont mobiles et situés également dans un même plan horizontal, sur le couvercle 8 lui-même, au niveau de la portion horizontale supérieure 81.

La distance séparant les deux axes inférieurs 84 et 85 est identique à celle séparant les deux axes supérieurs 86 et 87.

Un jeu de bielles 10 reliant, de chaque côté du box 1, d'une part les axes 84 et 86 et d'autre part les axes 85 et 87, définit avec la portion supérieure 81 du couvercle 8, un parallélogramme déformable susceptible d'assurer le déplacement de ce couvercle 8.

La position des axes fixes 84 et 85, situés à l'arrière du box 1 par rapport aux axes mobiles 86 et 87, permet un déplacement du couvercle 8 en hauteur et vers l'arrière, toujours parallèlement à lui-même.

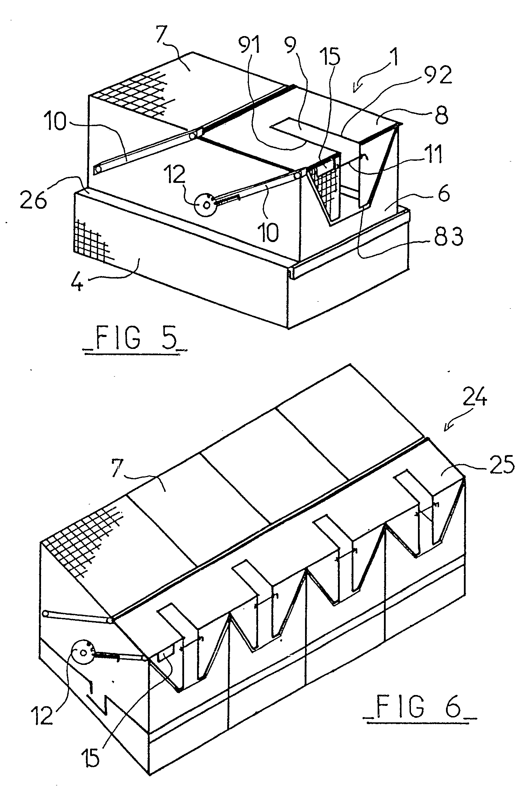

Ce couvercle 8 est associé à une roue à cliquet 12 représentée en détail figure 4, destinée à assurer son maintien en trois positions : une position ouverte, une position intermédiaire de gavage et une position fermée.

A cet effet, la roue à cliquet 12 fixe comprend trois encoches de positionnement 14. Cette roue 12 est centrée sur l'axe 85 et est associée à une des bielles 10, jouant le rôle de bras de manoeuvre. Le bras de manoeuvre 10 est muni d'une clavette à ressort 16 susceptible de venir se loger dans l'une des encoches 14 et bloquer le couvercle 8.

Le couvercle 8 comporte un orifice 15 servant de poignée de manoeuvre, visible figure 2.

La traction vers le haut de cette poignée de manoeuvre 15, tout en tirant la clavette 16, assure la déformation du parallélogramme formé par les bielles 10 et la rotation de l'axe 85 sur lui même, entraînant la mobilité du couvercle 8 jusqu'à une autre position de blocage par relachement de la clavette 16.

Comme on peut le voir figures 1 et 2 la partie interne du box 1 comprend un plancher 17, disposé entre le fond 2 et la face supérieure 7 du box 1. Ce plancher intermédiaire 17 est un plancher anatomique épousant les formes du corps de la volaille. Il est légèrement incliné vers l'arrière et ses côtés latéraux 173 et 174 remontent vers la face supérieure 7 pour suivre approximativement les contours de l'animal.

Ce plancher anatomique 17 est divisé en deux parties non reliées 171 et 172, délimitant une trappe 21 destinée au passage et au blocage des pattes.

La partie arrière 171 est fixe, solidaire de la face arrière 5 et des parois latérales 3 et 4. Elle comprend une partie verticale 22 assurant d'une part la rigidité du plancher 17 et d'autre part la butée et le maintien en position des pattes de la volaille.

La partie avant 172 est mobile et coulisse à la manière d'un tiroir dans des rainures 18 situées sur les faces latérales 3 et 4 du box 1. L'extrémité arrière de cette partie 172 comprend un retour inférieur 23 dont la partie sensiblement horizontale est en forme de fouchette et présente deux orifices 231 destinés au blocage des pattes.

Comme on peut le voir figure 1, la partie 172 du plancher anatomique 17 est susceptible de s'ouvrir entièrement. En position fermée les deux parties 171 et 172 délimitent un passage ou trappe 21 de hauteur sensiblement équivalente à la hauteur des pattes et destiné à les bloquer dans le sens longitudinal et en hauteur, entre les portions 22 et

4

23.

Le fond 2 du box 1 comporte, à son extrémité arrière, un orifice 20 destiné à évacuer les fientes de la volaille.

Ce box de contention 1, destiné au gavage des volailles peut être réalisé en grillage métallique ou en matériau plastique, cette dernière solution étant avantageuse notamment au niveau du poids et des diverses possibilités de moulage.

Le box aura des dimensions correspondantes à la volaille devant y être enfermée. Ces dimensions seront légèrement supérieures au volume d'encombrement de la volaille de façon à ce que celle-ci ne puisse trop y bouger.

Avant d'introduire l'animal dans le box 1 le couvercle 8 est mis en position ouverte au moyen de la poignée 15 et de la clavette 16, on enlève la goupille de verrouillage 11 et on tire vers l'extérieur la partie mobile 172 du plancher anatomique 17.

L'animal est placé dans le box, la partie mobile 172 est repoussée pour bloquer les pattes et le cou de la volaille est introduit dans la rainure 9, la tête à l'extérieur. Le couvercle 8 peut alors être manoeuvré vers le bas pour le fermer.

Lorsque l'on désire gaver l'animal, son cou est repoussé vers l'arrière du couvercle 8, au niveau de la partie horizontale 81 et on place la goupille 11 de verrouillage. La poignée 15 est actionnée avec la clavette 16 pour relever le couvercle 8 et le mettre en position intermédiaire de gavage. Les côtés 91 et 92 de la rainure 9 viennent se placer sous la tête de l'animal, au niveau des carotides, et servent de fourchette de positionnement de cette tête. L'animal est alors tiré vers le haut par appui sous la tête et retenu par le bas grâce au plancher anatomique 17, en deux parties.

La goupille de verrouillage 11 empêche la tête de sortir de la rainure 9.

La position de gavage, déterminée par le positionnement des encoches 14 sur la roue à cliquet 12, est calculée de façon à obtenir un blocage de la tête et une extension du cou suffisante, sans blesser l'animal.

Le mouvement du couvercle vers le haut, l'arrière, et toujours parallèle à lui-même, assure un blocage mécanique sûr et efficace de la tête.

Ce blocage particulier, réalisé au niveau des carotides, entraîne une réaction physiologique de la volaille. Le contact et l'appui à cet endroit réduisent la circulation sanguine de la tête et provoquent un blocage de la citerne céphalique de l'animal que a ainsi tendance à moins se débattre, même en absence d'une force de traction importante. Il ouvre de plus naturellement son bec.

Le box de contention selon l'invention permet donc un blocage de l'animal en position de gavage, c'est-à-dire maintien en position de la tête et extension du cou, réalisé uniquement par des moyens mécaniques.

Etant donné le déplacement du couvercle 8 et plus particulièrement de la partie verticale 82 vers l'arrière et le haut, lors de la mise en position de gavage, le cou et le jabot de l'animal sont directement exposés en face de l'opérateur, ce qui autorise leur massage lors de l'opération de gavage. L'animal se retrouve en position fixe, toujours parallèle à la gaveuse. Sa tête est immobile et permet au gaveur de travailler d'une seule main, autorisant de l'autre le contrôle du remplissage du jabot.

Le maintien en position continue de l'ensemble du corps de l'animal permet d'éviter de nombreuses blessures et de concentrer les déjections dans un endroit précis.

La figure 5 représente en perspective un box de contention présentant un décrochement inférieur 26 associé à tous les éléments caractéristiques de l'invention précédemment décrits.

La présence de ce décrochement 26 assure l'insertion des bielles 10 dans l'encombrement général du box 1. Plusieurs boxes peuvent ainsi être placés côte à côte sans difficultés.

La figure 6 représente une enceinte de transport et de gavage 24 réalisée par l'association de quatre boxes de contention précédemment décrits.

L'enceinte 24 est munie d'un couvercle unique 25 recouvrant les quatres compartiments.

Le système d'ouverture et de fermeture du couvercle 25 de l'enceinte 24 est identique au système décrit pour un box 1 précédent.

Dans le cas de l'enceinte 24, les quatre animaux enfermés sont placés simultanément en position de gavage.

Les boxes 1, comme les enceintes 24 sont gerbables et susceptibles d'assurer le transport des animaux.

On pourra prévoir, au niveau des postes de gavage, une charpente de réception des boxes 1 ou enceintes 24, assurant le groupement de ces différents dispositifs en batterie.

Bien entendu, l'invention ne se limite pas aux détailes des modes de réalisation qui n'ont été décrits qu'à titre d'exemples, mais elle couvre également les réalisations qui n'en différeraient que par des détails, par des variantes d'exécution ou par l'utilisation de moyens équivalents.

C'est ainsi par exemple que, dans la réalisation du box 1 décrite, on peut déterminer, grâce au bras de manoeuvre 1 et à la clavette 16, trois positions du couvercle 8.

Dans d'autres réalisations possibles deux positions différentes pourront suffire : une position fermée et une position de gavage permettant également l'introduction de la volaille dans le box.

Afin de faciliter l'ouverture du couvercle, on peut prévoir l'association d'un levier à la bielle 10 munie de la roue à cliquet. Ce levier ou poignée pourra être escamotable, par exemple en prévoyant la possibilité de la faire coulisser le long de la bielle.

Le couvercle pourra également avoir des formes différentes telles qu'en arc de cercle.

La rainure longitudinale 9 pourra ne pas déboucher à l'extrémité avant du couvercle 8. Dans ce cas la rainure 9 sera associée à un orifice assurant le passage de la tête.

Le couvercle 8 pourra aussi être articulé autour d'un axe horizontal. Le couvercle 8 sera mobile en rotation autour de cet axe assurant, par sa mobilité, le blocage de la tête et la mise en extension du cou de la volaille.

Dans le cas de l'enceinte de transport la séparation entre les différents compartiments peut être réalisée par le caillebotis anatomique 17. Les bords latéraux 173 et 174 remontent alors jusqu'à la face supérieure 7 et ceci permet de séparer les volailles en ménageant entre elles un espace libre assurant leur aération.

Les signes de référence insérés après les caractéristiques techniques mentionnées dans les revendications, ont pour seul but de faciliter la compréhension de ces dernières, et n'en limitant aucunement la portée.

**Revendications**

1.- Dispositif de contention pour le gavage des volailles caractérisé en ce qu'il comporte des moyens de blocage de la tête et de mise en extension du cou de la volaille.

2.- Dispositif selon la revendication 1 caractérisé en ce que ces moyens consistent en une fourchette (91, 92) de positionnement de la tête prenant appui sous chaque côté de la dite tête, au niveau des carotides, et tirant l'animal vers le haut.

3.- Dispositif selon l'une quelconque des revendications 1 ou 2 caractérisé en ce que les moyens de blocage de la tête et de mise en extension du cou de la volaille sont associés à des moyens de blocage des pattes.

4.- Dispositif selon la revendication 3 caractérisé en ce que les moyens de blocage des pattes sont constitués par une trappe en deux parties (171, 172) : une partie arrière fixe (171) et une partie avant mobile (172), coulissante, venant bloquer les pattes dans l'espace (21) restant entre la partie arrière (171) et la partie avant (172).

5.- Box de contention pour le gavage des volailles, de forme parallélépipédique, comportant un couvercle (8) pour l'introduction de la volaille, lequel couvercle est articulé autour d'au moins un axe horizontal, caractérisé en ce que ce box (1) est muni d'un dispositif de contention comportant des moyens de blocage de la tête et de mise en extension du cou de la volaille.

6.- Box de contention selon la revendication 5 caractérisé en ce que les moyens de blocage de la tête et de mise en extension du cou de la volaille sont constitués par le couvercle (8), muni à cet effet d'une rainure longitudinale (9) de largeur correspondant au cou de l'animal, ladite rainure (9) s'étendant vers l'arrière à partir de l'extrémité avant (83) du couvercle (8) et étant associée à une goupille de verrouillage (11) du passage de la tête, les côtés (91, 92) de cette rainure (9) étant destinés à prendre appui sous chaque côté de la tête et à tirer l'animal vers le haut de façon à bloquer et à mettre en extension le cou lors du pivotement du couvercle (8) autour du ou des axes horizontaux.

7.- Box de contention selon l'une quelconque des revendications 5 ou 6 caractérisé en ce que le couvercle (8) est en forme d'équerre et constitue, en position fermée, au moins une partie de la face supérieure (7) et de la face avant (6) du box 1, ledit couvercle (8) étant articulé autour de quatre axes horizontaux (84, 85, 86, 87), deux inférieurs fixes (84, 84), situés dans le même plan horizontal et deux supérieurs mobiles (86, 87), situés sur le couvercle (8) lui-même, ces quatre axes (84, 85, 86, 87) définissant un parallélogramme déformable et assurant un déplacement du couvercle (8) vers le haut, parallèlement à lui-même.

8.- Box de contention selon l'une quelconque des revendications 5 à 7 caractérisé en ce que un des axes horizontaux (84, 85, 86, 87) est associé à un système de blocage en au moins deux positions, une position haute de blocage de la tête dans la rainure longitudinale et de mise en extension du cou et une position basse de fermeture du box (1).

9.- Box de contention selon l'une quelconque des revendications 7 et 8 caractérisé en ce que la portion (82) du couvercle (8) constituant une partie de la face avant (6) du box (1), en position basse, descend jusqu'à environ le niveau inférieur du corps de l'animal et le dégage lors de la mise en position haute de façon à libérer l'accès au jabot et permettre son massage lors du gavage.

10.- Box de contention selon l'une quelconque des revendications 5 à 9 caractérisé en ce qu'il comporte un plancher intermédiaire anatomique (17) épousant les formes du corps de l'animal et disposé entre le fond (2) et la face supérieure (7) du box (1).

11.- Box de contention selon l'une quelconque des revendications 5 à 10 caractérisé en ce qu'il comporte des moyens de blocage des pattes de l'animal.

12.- Box de contention selon les revendications 10 et 11 caractérisé en ce que le plancher anatomique (17) est en forme de trappe et est divisé en deux parties, une partie arrière (171) fixe et une partie avant (172) mobile, coulissant de l'avant vers l'arrière dans des rainures (18) situées sur les faces latérales (3, 4) du box (1) et venant bloquer les pattes de l'animal contre la partie arrière (171) fixe, ledit plancher (17) étant situé à une hauteur par rapport au fond (2), sensiblement équivalente à la hauteur des pattes de la volaille.

13.- Box de contention selon l'une quelconque des revendications 5 à 12 caractérisé en ce qu'il comporte à la partie arrière un trou ou orifice (20) destiné à évacuer les déjections de l'animal.

14.- Enceinte de transport pour volailles caractérisée en ce qu'elle est contituée d'un assemblage de boxes (1) de contention selon les revendications 5 à 13.

15.- Enceinte selon la revendication 17 caractérisée en ce que la séparation entre les différentes volailles est réalisée par l'intermédiaire du plancher anatomique (17) ledit plan-

**0 302 794**

cher (17) se prolongeant sur les côtés jusqu'à la face supérieure (7) de l'enceinte.

16.- Procédé de contention de volaille en vue du gavage caractérisé en ce qu'il consiste à bloquer la tête et à mettre en extension le cou de la volaille au moyen d'une fourchette prenant appui sous chaque côté de la tête au niveau des carotides et tirant l'animal vers le haut.

17.- Procédé selon la revendication 19 caractérisé en ce que la traction vers le haut est associée à un blocage des pattes au niveau de la partie inférieure du box.

7

0302794

_FIG 1_

_FIG 2_

_FIG 3_

_FIG 4_

0302794

FIG 5

FIG 6